# EUROPEAN PATENT APPLICATION

(11) **EP 4 195 451 A1**
(43) Date of publication of application: **14.06.2023**
(21) Application number: 22212611.2
(22) Date of filing: 09.12.2022
(51) Int. Cl.: H02J 50/00, H02J 50/05, H02J 50/80, H01R 24/00

(54) **CAPACITIVE WIRELESS POWER TRANSFER DEVICE**

(30) Priority: 10.12.2021 BE 202105963
(71) Applicant: Niko NV, 9100 Sint-Niklaas (BE)
(72) Inventor: VANHECK, Serge, 9140 Elversele (BE)
(74) Representative: DenK iP bv

(57) **Abstract**

The present invention provides a capacitive wireless power transfer device (10) comprising a wall part (1) adapted for being connected to a mounting box (13) in a wall, the wall part (1) comprising a wall part housing (3) and an energy sending module (or transmitter) and being further adapted for connecting the capacitive wireless power transfer device (10) to an electrical network, and at least one operational module (2) comprising a module housing (4) and a functional interface (5) and an energy receiving module (or receiver), the operational module (2) being adapted for being coupled to the wall part (1). The wall part (1) and the operational module (2) are adapted to be removably coupled to each other by means of a mechanical coupling (9a,9b,9c; 11a,11b; 12a,12b,12c; 14a,14b), and the wall part (1) and the operational module (2) are further adapted to, after mechanically being coupled, create a distance of between 0 and 5 mm between the wall part housing (3) and the module housing (4).

## Description

### Technical field of the invention

The present invention relates to a capacitive wireless power transfer device. More particularly, the capacitive wireless power transfer device with interchangeable functions for use in a home or building environment.

### Background of the invention

More and more new technologies arise for power supply to electric or electronic devices. One of these technologies is wireless power transfer. A lot of different wireless power transfer techniques exist.

For example, EP 2 780 999 describes a contactless power supply and signal transmission through a cladding element for surfaces of planar building parts, in particular in operating rooms, rooms prone to moisture or on building surfaces that are accessible for moisture. The cladding element is equipped with a transmission device for electrical energy and/or electrical signals, which transmission device comprises a supply module for electrical energy and/or electrical signals and a current derivation module for electrical current and/or electrical signals, which modules can be releasably connected to each other in such a way that the electrical energy and/or the electrical signals can be transmitted. The transmission device is arranged in a gap-free manner behind the cladding element, while the derivation module is arranged before the cladding element in a gap-free manner. Both modules comprise elements for the inductive transmission of electrical energy and/or electrical signals from the supply module to the derivation module and/or in the case of electric signals in reverse direction, as well as units for the gap-free and releasable fastening of the derivation module.

As the wireless power transfer occurs in an inductive way, the coupling between the elements in the device of EP 2 780 999 is a magnetic coupling, which may not always be as solid and reliable. Hence, when a user bumps into it with, e.g. a chair, or a vacuum cleaner or the like, the elements may be separated and fall onto the ground.

US 2016/0204659 describes a power transmission system comprising a power supply device, a transfer destination device, i.e. a plug, and a power transmission sheet. The power transmission sheet comprises an electrode layer, a transmission circuit, a covering layer and an attachable structure that enables to attach the plug to the power transmission sheet. Wireless power transfer in US 2016/0204659 occurs by electric field coupling. The plug is brought into contact with the power transmission sheet of the power supply unit and receives power supplied from the power supply unit. The electrodes of the power transmission sheet are paired with electrodes of the plug, and an electric field coupling portion for transferring high-frequency AC power is configured between the two pairs of electrodes.

In US 2016/0204659 the attachable structure may be formed by magnets or by glue. This leads either to the same problem of EP 2 780 999 of the connection not being reliable or solid (magnets) or to the problem that, once the plug is glued to the power transmission sheet, it cannot be released anymore. In the latter case this leaves no flexibility in terms of interchangeable functions or the like.

Further in US 2016/0204659 the plug is fixedly connected to the device that is intended to be provided with power, which makes the power transmission system not flexible in terms of powering other devices than the one attached.

### Summary of the invention

It is an object of embodiments of the present invention to provide a capacitive wireless power transfer device with interchangeable functions.

The above objective is accomplished by devices according to embodiments of the present invention.

The present invention provides a capacitive wireless power transfer device. The capacitive wireless power transfer device comprises a wall part adapted for being connected to a mounting box in a wall and comprising a wall part housing and an energy sending module or transmitter and being further adapted for connecting the capacitive wireless power transfer device to an electrical network. The capacitive wireless power transfer device further comprises at least one operational module comprising a module housing and a functional interface and an energy receiving module or receiver, the operational module being adapted for being coupled to the wall part. The wall part and the operational module are adapted to be removably coupled to each other by means of a mechanical coupling and are further adapted to, after mechanically being coupled, create a distance of between 0 and 5 mm between the wall part housing and the module housing so that power or energy transfer between the wall part and the operational module is capacitive. An advantage of a capacitive wireless power transfer device according to embodiments of the invention is that the energy receiving part fits into a 45x45 wall mounting box and thus can be used for replacing existing power supplies such as, for example, sockets, USB chargers or the like. Further, the use of wireless capacitive charging allows to transfer much more power within a limited surface compared to other wireless charging techniques, such as for example inductive charging.

Because, in a capacitive wireless power transfer device according to embodiments of the invention, the wall part and operational module are mechanically coupled, they can be positioned very adequately which results in a good performance of the capacitive power supply. It is thus the combination of the mechanical coupling and capacitive wireless power or energy transfer that makes the capacitive wireless power transfer device according to embodiments of the invention work, because capacitive wireless power or energy transfer can only transfer power or energy over a few millimeter.

A further advantage of a capacitive wireless power transfer device according to embodiments of the invention is that the operational module can easily be interchanged.

The wall part and the operational module may be further adapted for bidirectional exchange of data between both parts.

According to embodiments of the invention, the operational module may have a circular shape and may fit into a circular recess in the wall part.

According to other embodiments, the operational module may have a square shape and may fit into a square recess in the wall part.

According to still further embodiments, the module housing may have a square shape and its size may be substantially equal to the size of the wall part, so that, when the wall part and the operational module are mechanically coupled, the module housing may be substantially full cover the wall part.

According to embodiments of the invention, the mechanical coupling may comprise notches and grooves on the wall part and protrusions on the operational module, whereby the protrusions are provided at opposite sides of the operational module and whereby an imaginary line connecting the two protrusions and an imaginary line connecting the two notches along the circumference of the central recess are substantially perpendicular to each other.

According to other embodiments, the mechanical coupling may comprise two slots at opposite sides in a circumference of a central recess in the wall part and two coil springs at an outer side of the operational module which are adapted to fit into the slots in the wall part.

According to further embodiments of the invention, the mechanical coupling may comprise two slots in the wall part and two snaps provided on a back side of the module housing which fit into the slots in the wall part.

According to still further embodiment, the module housing may have a same size as the wall part and wherein the mechanical coupling comprises grooves in the wall part housing and ribs on the module housing which are adapted to be slid into the grooves on the wall part.

The grooves may be provided on a front side of the wall part and the ribs may be provided at a back side and near the edge of the module housing, the ribs extending in a direction from a top side to a bottom side of the module housing over half the length of the module housing and starting at the top side of the module housing.

According to other embodiments, the grooves may be formed at a side surface of the wall part housing, the grooves running from a top side to a bottom side of the wall part housing and the ribs may be provided as an extension of a side surface of the module housing, running from a top side to a bottom side of the module housing.

According to embodiments of the invention, the functional interface may be one of a socket, a USB connector, a USBC connector, a plug-in for an orientation light or the like.

### Brief description of the drawings

It has to be noted that same reference signs in the different figures refer to same, similar or analogous elements.
Fig. 1, Fig.2 and Figs. 3A and 3B schematically illustrate a capacitive wireless power transfer device according to an embodiment of the invention.
Fig. 4 schematically illustrates a capacitive wireless power transfer device according to an embodiment of the invention.
Fig. 5 schematically illustrates a capacitive wireless power transfer device according to an embodiment of the invention.
Figs. 6A and 6B schematically illustrate a capacitive wireless power transfer device according to an embodiment of the invention.
Figs. 7A and 7B schematically illustrate a capacitive wireless power transfer device according to an embodiment of the invention.
Figs. 8A and 8B schematically illustrate a capacitive wireless power transfer device according to an embodiment of the invention.
Fig. 9 schematically illustrates a capacitive wireless power transfer device according to an embodiment of the invention.
Fig. 10 schematically illustrates a capacitive wireless power transfer device according to an embodiment of the invention.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

Not all embodiments of the invention comprise all features of the invention. In the following description and claims, any of the claimed embodiments can be used in any combination.

The present invention provides a capacitive wireless power transfer device comprising a wall part and an operational module. The wall part is adapted for being connected to a mounting box in a wall and the wall part comprises a wall part housing and an energy sending module or transmitter. The wall part is further adapted for connecting the capacitive wireless power transfer device to an electrical network. The operational module comprises a module housing, a functional interface and an energy receiving module or receiver. The operational module is adapted for being coupled to the wall part. The wall part and the operational module are adapted to be removably coupled to each other by means of a mechanical coupling, and the wall part and the operational module are further adapted to, after mechanically being coupled, crate a distance of between 0 and 5 mm between the wall part housing and the module housing.

Because of this distance between 0 and 5mm, power or energy transfer between the wall part and the operational module can occur in a capacitive way.

An advantage of a capacitive wireless power transfer device according to embodiments of the invention is that the energy receiving part fits into a 45x45 wall mounting box and thus can be used for replacing existing power supplies such as, for example, sockets, USB chargers or the like. Further, the use of wireless capacitive charging allows to transfer much more power within a limited surface compared to other wireless charging techniques, such as for example inductive charging.

Because, in a capacitive wireless power transfer device according to embodiments of the invention, the wall part and operational module are mechanically coupled, they can be positioned very adequately which results in a good performance of the capacitive power supply. It is thus the combination of the mechanical coupling and capacitive wireless power or energy transfer that makes the capacitive wireless power transfer device according to embodiments of the invention work, because capacitive wireless power or energy transfer can only transfer power or energy over a few millimeter.

With mechanically being coupled is meant that the wall part and the operational module are physically connected to each other. Therefore, the wall part comprises a first part for forming a mechanical coupling and the operational module comprises a second part of the mechanical coupling. By connecting both parts with each other, as will be described further in detail herebelow, the wall part is mechanically coupled to the operational module. This mechanical coupling provides a robust coupling, though can still easily be decoupled for removing the operational module and/or replacing the operational module by another operational module.

A further advantage of a capacitive wireless power transfer device according to embodiments of the invention is thus that the operational module can easily be interchanged.The present invention will hereinafter be described by means of different embodiments. It has to be understood that these embodiments are only for the ease of understanding the invention and are not intended to limit the invention in any way.

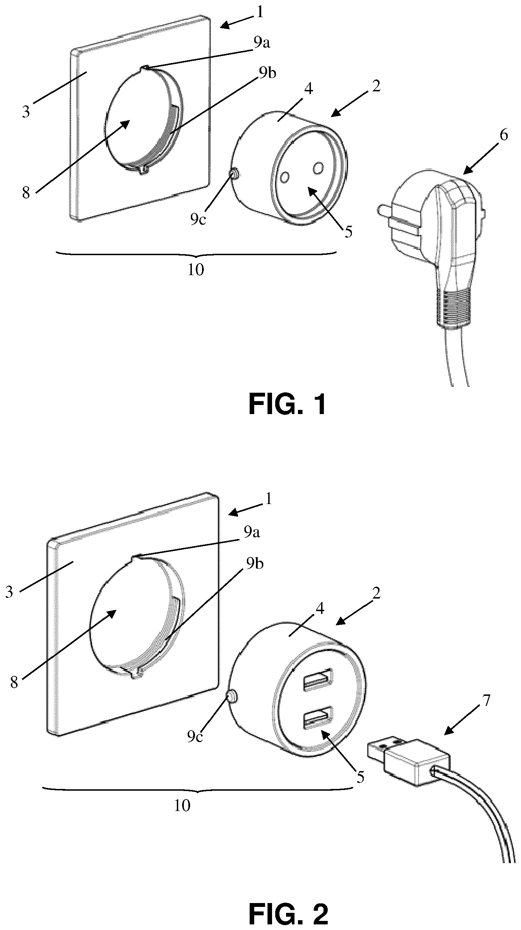

Figs. 1 and 2 schematically illustrate a capacitive wireless power transfer device 10 according to embodiments of the invention. The capacitive wireless power transfer device 10 comprises a wall part 1 and an operational module 2. The wall part 1 is adapted for being connected to a mounting box (not shown in this figure) in a wall. Connecting the wall part 1 to a mounting box can be done in any suitable way as known by a person skilled in the art, such as, for example but not limited to, by means of screws or claws. The wall part 1 comprises a wall part housing 3. Inside the wall part housing 3 an energy sending module or transmitter is provided. The transmitter is formed by a building in block comprising a power supply and a transformer and is connected to the electrical network. The wall part 1 is thus further adapted for connecting the capacitive wireless power transfer device 10 to an electrical network. The operational module 2 comprises a module housing 4. Inside the module housing 4 an energy receiving module or receiver is provided.

The wall part housing 3 and the module housing 4 may preferably made of a plastic material.

The operational module 2 further comprises a functional interface 5. With functional interface is meant an interface of the operational module which provides the ability for connecting an electric or electronic device to for being powered or being charged. The functional interface 5 may, for example, be a socket, a USB or USBC connector, a plug in for an orientation light, ... or the like. The functional interface 5 can thus be different according to its function or what its intended use is. In the example given, the functional interface 5 may be a socket for receiving a plug 6 of an electric or electronic device that needs to be powered. Another example is given in Fig. 2, where the functional interface 5 may be a USB connector for receiving a USB cable 7 from an electric or electronic device to be charged.

The shape of the operational module 2 is adapted to fit into a central recess 8 in the wall part 1. In the embodiment illustrated in Figs. 1 and 2 the wall part 1 may have a square shape and the recess 8 may have a circular shape. According to this embodiment, the operational module 2 may have a circular shape with a similar diameter as the central recess 8 in the wall part 1, so as to fit into that circular recess 8. Consequently, the module housing 4 may, according to this embodiment, have a circular shape to fit into the circular recess 8 in the wall part 1. According to the present embodiment, the module housing 4 may have a similar size as the circular recess 8 in the wall part 1 so as to fit into the recess 8.

The wall part 1 and the operational module 2 further comprise a mechanical coupling 9a,9b. The mechanical coupling 9a,9b,9c is adapted to removably couple the wall part 1 and the operation module 2 to each other. In other words, the wall part 1 and the operational module 2 are adapted to be mechanically coupled to each other in a way that the operational module 2 can easily be removed and/or interchanged. Of course, the different operational modules 2 that can be used with the wall part 1 depend on the type of functional interface 5 of the capacitive wireless power transfer device 10.

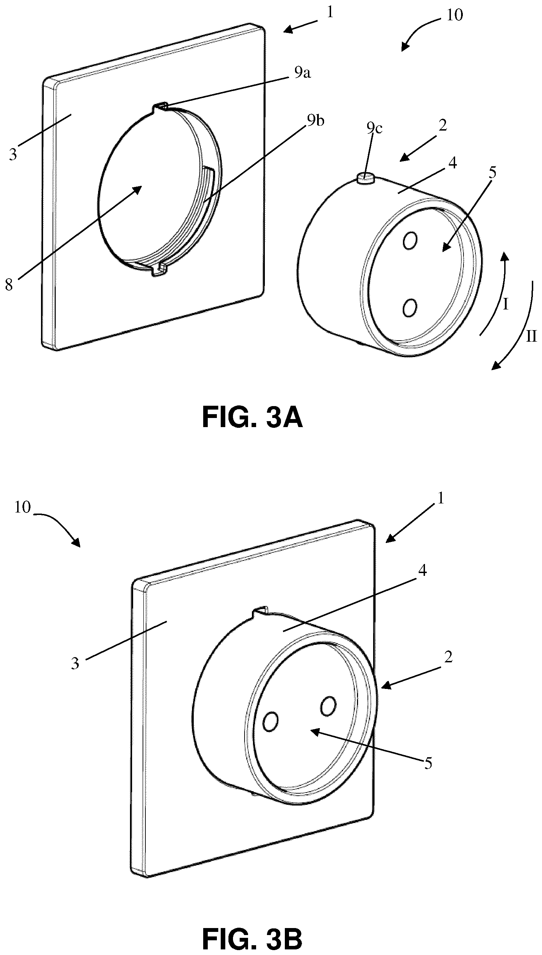

The mechanical coupling 9a, 9b, 9c comprises a first part 9a,9b on the wall part 1 and a second part 9c on the operational module 2. In the example given in Figs. 1 and 2, the first part 9a,9b of the mechanical coupling may comprise two notches 9a and two grooves 9b along the circumference of the central recess 8 in the wall part 1 and the second part 9c of the mechanical coupling may comprise two protrusions 9c at the circumference of the circular operational module 2, the protrusions 9c being adapted to fit into the notches 9a on the wall part 1. The two notches 9a,9b may be provided at opposite sides of the recess 8, one at the top and one at the bottom side of the recess 8 as illustrated in Fig. 3A and 3B. Accordingly, the protrusions 9c may be provided at a opposite sides of the operational module 2, i.e. one at the right side and one at the left side. An imaginary line connecting the two protrusions 9c and an imaginary line connecting the two notches 9a along the circumference of the central recess 8 should be substantially perpendicular to each other, so that the wall part 1 and the operational module 2 can be mechanically coupled to each other after turning the operational module 2 over 45° (see further). Two grooves 9b are provided in the circumference of the central recess 8. Each groove 9b extending away from one of the two notches 9a in a same direction over 45° of the circumference of the central recess 8. The end of the groove 9b forms a kind of stop for the protrusions 9c so as to limit the movement of the operational module 2, in the example given to 45°.

According to other embodiments, the notches 9a,9b may also be provided at opposite sites at the left and right side of the circumference of the central recess 8, while the protrusions 9c may be provided at opposite sites at the top and bottom of the operational module 2. What is important is, as mentioned above, that the imaginary line connecting the two protrusions 9c on the operational module 2 is substantially perpendicular to the imaginary line connecting the two notches 9a in the circular recess 8 of the wall part 1, so that the operational module 2 can be turned over 90° for the protrusions 9c to slide into the groove 9b in the central recess 8 of the wall part 1. It has to be noted that, for some functional interfaces 5 such as e.g. a socket, the location of the notches 9a and the protrusions 9b have to be such that, when the operational module 2 is coupled to the wall part 1, the functional interface 5 has a correct orientation as known by a person skilled in the art. For other functional interfaces 5, this may be less important, and any location of the notches 9a and protrusions 9b may be possible in such cases.

Coupling the operational module 2 to the wall part 1 may then be done as is illustrated in Figs. 3A and 3B. In a first step (I) the operational module 2 may be rotated over 45° so as to align the protrusions 9c on the operational module 2 with the notches 9a in the circumference along the central recess 8 in the wall part (see Fig. 3A). Then, the protrusions 9c may be inserted in the notches 9a by moving the operational module 2 towards the wall part 1 (see step II in Fig. 3A). Finally, the operational module 2 is rotated over 45° by sliding the protrusions 9c into the grooves 9b until the protrusions 9c reach the end of the grooves 9b (see step III in Fig. 3A). Fig. 3B illustrates the capacitive wireless power transfer device 10 in a condition ready to be used, i.e. in a condition where the operational module 2 is mechanically coupled to the wall part 1. Removing the operational module 2 from the wall part 1 can be done by simply rotating the operational module 2 over 45° in the opposite direction until the protrusions 9c are again aligned with the notches 9a and removing the operational module 2 by moving it away from the wall part 1.

The protrusions 9c may be positioned on the module housing 4 at a position such that when the operational module 2 is coupled to the wall part 1, a distance of between 0 and 5 mm is created between the wall part housing 3 and the module housing 4. Hence, after the wall part 1 and the operational module 2 are mechanically coupled, a distance of between 0 and 5mm is created between the wall part housing 3 and the operational module housing 4. As the wall part housing 3 and the module housing 4 are preferably made out of a plastic material, no electrical contact is made between the wall part 1 and the operational module 2. The energy sending module or transmitter and the energy receiving module or receiver are located close to the sides of respectively the wall part housing 3 and the module housing 4 that face each other so that when the operational module is coupled to the wall part 1, and a distance of between 0 and 5 mm is created between the wall part housing 3 and the module housing 4, the energy sending module or transmitter and the energy receiving module or receiver are at the perfect distance that allows capacitive power transfer between the energy sending module or transmitter in the wall part 1 and the energy receiving module or receiver in the operational module 2. Only the wall part housing 3 and the module housing 4 are in between the energy sending module or transmitter and the energy receiving module or receiver. Hence, the energy sending module may be located at the location of the recess 8 in the wall part 1, just underneath the wall part housing 3. The energy receiving module may be located at the location of the functional interface 5 in the operational module 2, just underneath the module housing 4.

The combination of the mechanical coupling between the wall part 1 and the operational module 2 and the thereby created distance between the transmitter and receiver such that capacitive wireless power transfer is enabled provides as an advantage that, because of the mechanical coupling, the wall part 1 and the operational module 2 can very adequately be positioned with regard to each other, which results in a good performance of the capacitive wireless power transfer. According to embodiments of the invention, the wall part 1 and the operational module 2 may further be adapted for bidirectional exchange of data between both parts.

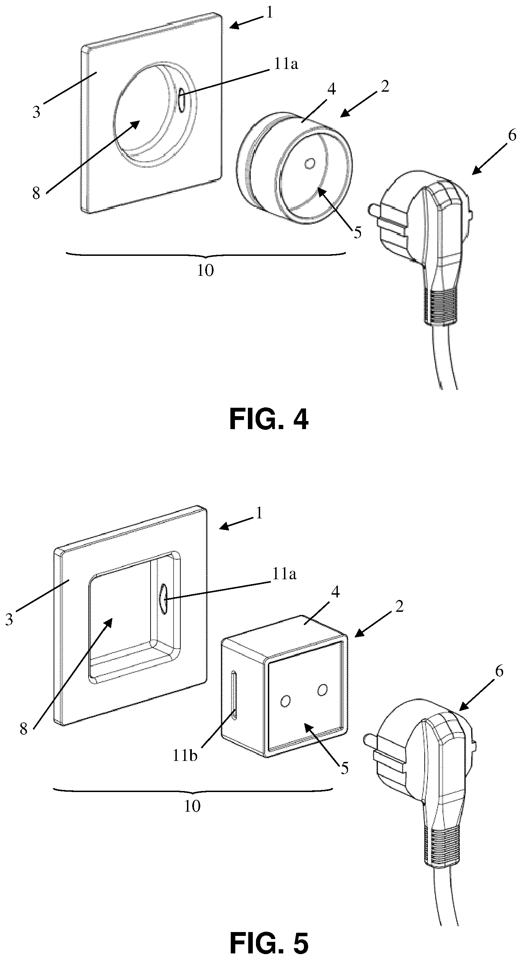

Fig. 4 illustrates another embodiment of a capacitive wireless power transfer device 10 according to the invention. The capacitive wireless power transfer device 10 according to this embodiment is similar to the one described in the embodiment above, but the mechanical coupling is different. According to the present embodiment, the mechanical coupling 11a,11b may be a snap fit coupling and may comprise two slots 11a at opposite sides on the circumference of the central recess 8 in the wall part 1 and two coil springs 11b at an outer side of the operational module 2 adapted to fit into the slots 11a in the wall part 1. According to embodiments of the invention, the snap fit coupling may be a bi-directional snap fit coupling, so that the operational module 2 can easily be removed from the wall part 1 by applying a small force on the snap fit coupling.

Fig. 5 illustrates a further embodiment of a capacitive wireless power transfer device 10 according to the invention. The mechanical coupling 11a,11b is the same as in the embodiment illustrated in Fig. 4. However, according to the present embodiment, the central recess 8 in the wall part 1 may have a square shape. Accordingly, the operational module 2 may also have a square shape so as to fit into the central recess 8 in the wall part 1. Consequently, the module housing 4 may, according to this embodiment, have a square shape to fit into the square recess 8 in the wall part 1. According to the present embodiment and similar as for the above described embodiments, the module housing 4 may have a similar size as the circular recess 8 in the wall part 1 so as to fit into the recess 8.

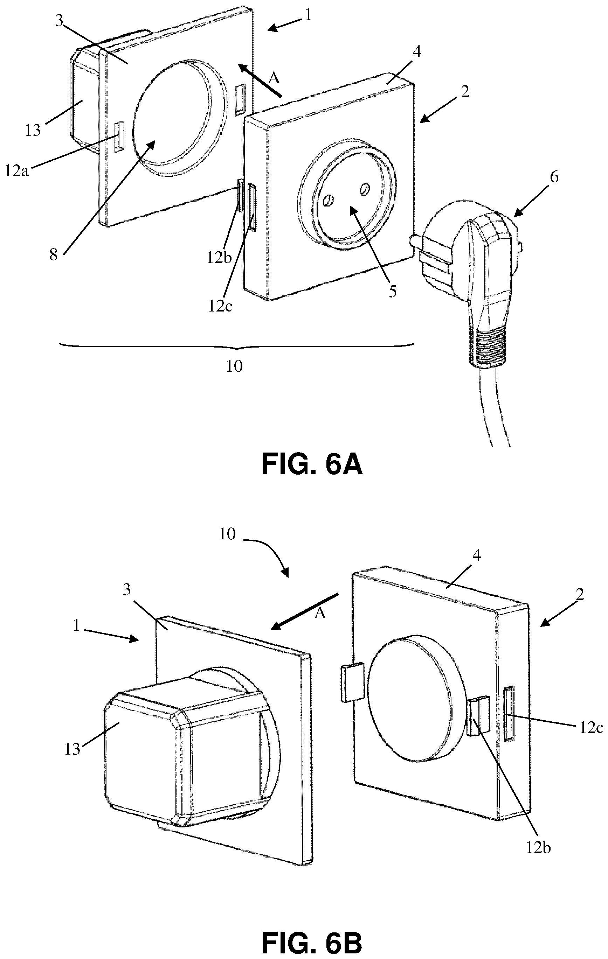

Figs. 6A and 6B illustrate a further embodiment of a capacitive wireless power transfer device 10 according to the invention. According to this embodiment, the module housing 4 may have a square shape and its size may be equal to the size of the wall part 1. In other words, according to the present embodiment, the functional interface 5 may be provided in a square shaped module housing 4. Similar as described above for the other embodiments, the functional interface 5 may have any suitable shape, such as circular or square. In the example given, the functional interface 5 may have a circular shape. According to the present embodiment, at a back side, the module housing 4 may comprise a circular protrusion 5a that fits into a circular recess 8 in the wall part 1.

As already mentioned above, the wall part 1 is adapted for being connected to a mounting box 13 in a wall, this is illustrated in Figs. 6A and 6B. The wall part 1 may be connected to the mounting box 13 in any suitable way as known by a person skilled in the art, such as, for example but not limited to, by means of screws or claws.

In the present example, the mechanical coupling may be formed by two slots 12a in the wall part 1 in which two snaps 12b provided on a back side of the module housing 4 fit. For connecting the operational module 2 to the wall part 1, the operational module 2 may be moved towards the wall part 1 in a direction indicated by arrow A until the snaps 12b are positioned in the slots 12a. A further push makes that the snaps 12b are snapped into the slots 12a, so that the operational module 2 is fixed to the wall part 1. According to the present embodiment, when the operational module 2 is removably fixed to the wall part 1, the operational module 2, or the module housing 4, substantially completely covers the wall part 1. Hence, the module housing 4 may have a same size and shape as the wall part 1. The operational module 2 can easily be removed from the wall part 1 by pushing the little button 12c that is provided at a side of the module housing 4 at the height of the snaps 12b.

According to embodiments of the invention, the slots 12a may or may not go all the way through the wall part housing 3. In other words, according to some embodiments, the slots 12a may be formed by rectangular holes in the wall part housing 3. According to other embodiments, the slots 12a may also be formed by rectangular recesses in the wall part housing 3.

An advantage of a capacitive wireless power transfer device 10 according to embodiments of the invention illustrated in Figs. 6A and 6B is that the wall part 1 is, after connecting the operational module 2 to it, is no longer visible.

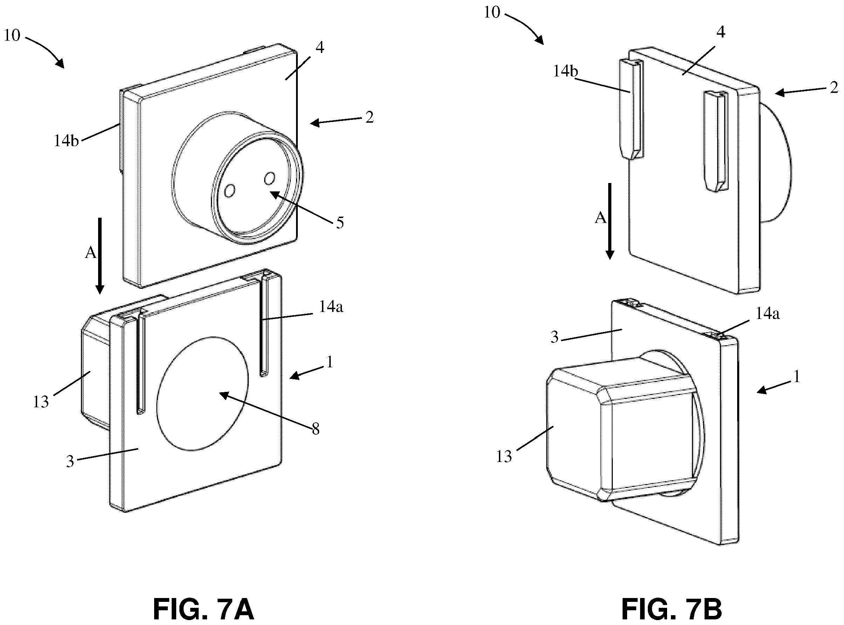

Figs. 7A and 7B illustrate another embodiment of a capacitive wireless power transfer device 10 in which, similar as to the embodiment illustrated in Figs. 6A and 6B, the module housing 4 may have a square shape and its size may be equal to the size of the wall part 1. The functional interface 5 has, according to the present embodiment, a circular shape. However, the functional interface 5 does not necessarily has to be circular, but may have any suitable shape. According to the embodiment illustrated in Figs. 7A and 7B, the mechanical coupling may comprise grooves 14a in the wall part housing 3 and ribs 14b on the module housing 4. The ribs 14b can be slid into the grooves 14a on the wall part 1 in a direction indicated by arrow A in Figs. 7A and 7b. In that way, the operational module 2 may be removably coupled to the wall part 1.

For removing the operational module 2 from the wall part 1, the operational module 2 may be moved in a direction opposite to the arrow A and simply be removed.

In the example given in Figs. 7A and 7B, the ribs 14b are provided at a back side and near the edge of the module housing 4. The ribs 14b extend from a top side to a bottom side of the module housing 4 over half the length of the module housing 4 and starting at the top side. On the wall part 1, the grooves 14a are provided on a front side such that, when the operational module 2 is removably coupled to the wall part 1, the back side of the operational module 2 faces the front side of the wall part 1.

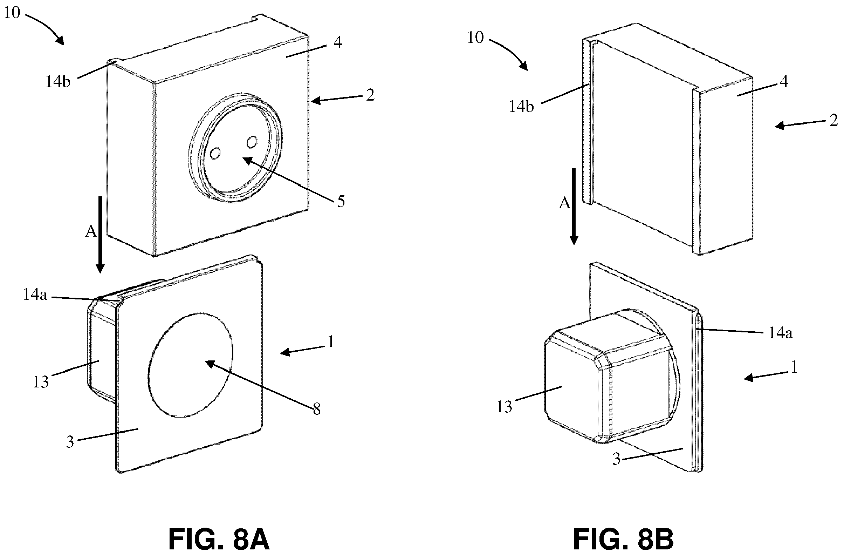

According to other embodiments, and as illustrated in Figs. 8A and 8B, the ribs 14b may be provided as an extension of a side surface of the module housing 4, running from a top side to a bottom side of the module housing 4. The grooves 14b may be formed at a side surface of the wall part housing 3, also running from a top side to a bottom side of the wall part housing. Again, similar as for the embodiment illustrated in Figs. 7A and 7B, for removably coupling the operational module 2 to the wall part 1, the ribs 14b on the operational module 2 may be slid into the grooves 14a on the wall part 1 in a direction indicated by arrow A.

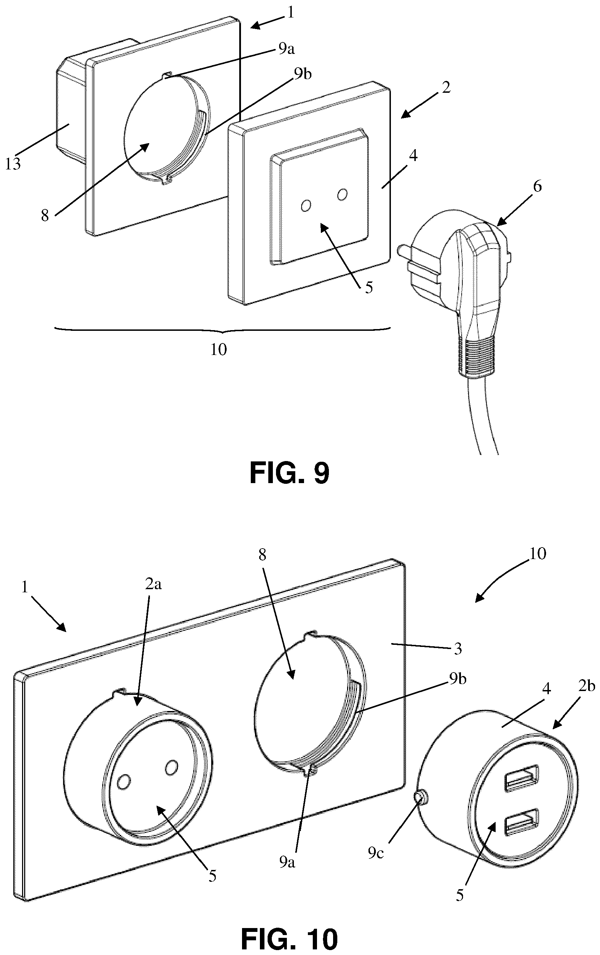

As already mentioned above, in cases where the module housing 4 has a square shape and has a size similar to the size of the wall part 1, the functional interface 5 does not necessarily has to be circular. Indeed, Fig. 9 illustrates a capacitive wireless power transfer device 10 according to a further embodiments of the invention, where the functional interface 5 has a square shape. In this example, the mechanical coupling 9a,9b,9c may be the same as illustrated in Figs. 1, 2, 3A and 3B. Therefore, according to the present embodiment, at a back side, the module housing 4 may comprise a circular protrusion (not shown in this figure) that fits into a circular recess 8 in the wall part 1, similar as illustrated in Fig. 6B. According to this embodiment, the operational module 2 may be coupled to the wall part 1 in a same way as discussed with respect to Figs. 3A and 3B.

From the above embodiments, it is clear that a capacitive wireless power transfer device 10 according to embodiments of the invention may have any suitable combination of shapes and mechanical couplings as thoroughly illustrated in the different figures.

In the above examples, single capacitive wireless power transfer devices were illustrated. However, it has to be understood, that also multiple capacitive wireless power transfer devices fall within the scope of the invention. Indeed, a capacitive wireless power transfer device 10 according to embodiments of the invention, may comprise any combination of 2, 3, 4 or more operational modules 2 as required. Fig. 10 illustrates a twofold capacitive wireless power transfer device 10 according to a further embodiment of the invention. The twofold capacitive wireless power transfer device 10 may comprise two same or two different operational modules 2a,2b. In the example given, the capacitive wireless power transfer device 10 may comprise two different operational modules, i.e. a socket module 2a and an USB module 2b. The twofold capacitive wireless power transfer device 10 may comprise a common wall part 1 and thus a common wall part housing 3. Consequently, the wall part 1 may comprise two central recess 8. In the example given, the mechanical coupling 9a,9b,9c may be the same for both operational modules 2a, 2b and may be similar as the mechanical coupling 9a,9b,9c as for the embodiments illustrated in Figs. 1, 2 3A and 3B. According to other embodiments of the invention, the mechanical coupling 9a,9b,9c may be any other mechanical coupling as described above with respect to other embodiments and may, if required for particular applications, also be different for both operational modules 2a, 2b.

According to still further embodiments, a capacitive wireless power transfer device may also comprise more than two operational modules 2, such as for example 3 or 4 or more if required by a particular application. The different operational modules 2 may all be the same or may be different. The mechanical coupling 9a,9b,9c; 11a,11b; 12a,12b; 14a,14b for coupling the operational modules 2 to the wall part 1 may be the same for all operational modules 2 or may, according to other embodiments, be different for some or all operational modules 2.

## Claims

1. A capacitive wireless power transfer device (10) comprising:
- a wall part (1) comprising a wall part housing (3) and an energy sending module and being adapted for connecting the capacitive wireless power transfer device (10) to an electrical network,
- at least one operational module (2) comprising a module housing (4) and an energy receiving module, the operational module (2) being adapted for being coupled to the wall part (1),
wherein
- the wall part (1) is adapted for being connected to a mounting box (13) in a wall,
- the at least one operational module (2) comprising a functional interface (5) for connecting an electric or electronic device to for being powered or being charged,
- the wall part (1) and the operational module (2) are adapted to be removably coupled to each other by means of a mechanical coupling (9a,9b,9c; 11a,11b; 12a,12b,12c; 14a,14b), and
- the wall part (1) and the operational module (2) are further adapted to, after mechanically being coupled, create a distance of between 0 and 5 mm between the wall part housing (3) and the module housing (4).

2. A capacitive wireless power transfer device (10) according to claim 1, wherein the wall part (1) and the operational module (2) are further adapted for bidirectional exchange of data between both parts.

3. A capacitive wireless power transfer device (10) according to claim 1 or 2, wherein the operational module (2) has a circular shape and fits into a circular recess (8) in the wall part (1).

4. A capacitive wireless power transfer device (10) according to claim 1 or 2, wherein the operational module (2) has a square shape and fits into a square recess (8) in the wall part (1).

5. A capacitive wireless power transfer device (10) according to any of the previous claims, wherein the module housing (4) has a square shape and its size is equal to the size of the wall part (1).

6. A capacitive wireless power transfer device (10) according to any of the previous claims, wherein the mechanical coupling comprises notches (9a) and grooves (9b) on the wall part (1) and protrusions (9c) on the operational module (2), whereby the protrusions (9c) are provided at opposite sides of the operational module (2) and whereby an imaginary line connecting the two protrusions (9c) and an imaginary line connecting the two notches (9a) along the circumference of the central recess (8) are substantially perpendicular to each other.

7. A capacitive wireless power transfer device (10) according to any of claims 1 to 5, wherein the mechanical coupling comprises two slots (11a) at opposite sides in a circumference of a central recess (8) in the wall part (1) and two coil springs (11b) at an outer side of the operational module (2) which are adapted to fit into the slots (11a) in the wall part (1).

8. A capacitive wireless power transfer device (10) according to claim 5, wherein the mechanical coupling comprises two slots (12a) in the wall part (1) and two snaps (12b) provided on a back side of the module housing (4) which fit into the slots (12a) in the wall part (1).

9. A capacitive wireless power transfer device (10) according to claim 5, wherein the mechanical coupling comprises grooves (14a) in the wall part housing (3) and ribs (14b) on the module housing (4) which are adapted to be slid into the grooves (14a) on the wall part (1).

10. A capacitive wireless power transfer device (10) according to claim 9, wherein the grooves (14a) are provided on a front side of the wall part (1) and wherein the ribs (14b) are provided at a back side and near the edge of the module housing (4), the ribs (14b) extending in a direction from a top side to a bottom side of the module housing (4) over half the length of the module housing (4) and starting at the top side of the module housing (4).

11. A capacitive wireless power transfer device (10) according to claim 9, wherein grooves (14a) are formed at a side surface of the wall part housing (3), the grooves (14a) running from a top side to a bottom side of the wall part housing (3) and wherein the ribs (14b) are provided as an extension of a side surface of the module housing (4), running from a top side to a bottom side of the module housing (4).

12. A capacitive wireless power transfer device (10) according to any of the previous claims, wherein the functional interface (5) is one of a socket, a USB connector, a USBC connector, a plug-in for an orientation light or the like.
